# EUROPÄISCHE PATENTSCHRIFT

(11) **EP 1 799 387 B1**
(45) Veröffentlichungstag und Bekanntmachung des Hinweises auf die Patenterteilung: **21.03.2012**
(21) Anmeldenummer: 05769649.4
(22) Anmeldetag: 05.07.2005
(51) Int. Cl.: B23D 61/02, B27B 19/00

(54) **Verfahren mit einem Werkzeugaufsatz für eine Handwerkzeugmaschine**
Process with a tool attachment for a hand tool
Procédé avec piece rapportée d'outil pour une machine outil à main

(30) Priorität: 13.09.2004 DE 102004044135
(43) Veröffentlichungstag der Anmeldung: 27.06.2007
(73) Patentinhaber: ROBERT BOSCH GMBH, 70442 Stuttgart (DE)
(72) Erfinder: BOHNE, Ulrich, 72664 Kohlberg (DE)
(74) Vertreter: Daub, Thomas
(86) Internationale Anmeldenummer: PCT/EP2005/053205
(87) Internationale Veröffentlichungsnummer: WO 2006/029915

(56) Entgegenhaltungen:
- EP-A- 1 297 932
- DE-A1- 2 934 258
- US-A- 3 905 374
- US-A1- 2002 104 421

## Beschreibung

### Stand der Technik

Die Erfindung geht aus von einem Verfahren mit einem Werkzeugaufsatz für eine Handwerkzeugmaschine nach dem Oberbegriff des Anspruchs 1.

Bei einer Handwerkzeugmaschine mit oszillierender Abtriebseinheit, beispielsweise einer Abtriebswelle, oszilliert diese mit hoher Frequenz zwischen zwei Winkelstellungen hin und her. Diese Oszillation wird auf den mit der Abtriebswelle verbundenen Werkzeugaufsatz übertragen. Je nach Werkzeugaufsatz ist eine derartige Handwerkzeugmaschine sehr vielseitig einsetzbar. So kann die Handwerkzeugmaschine zum Schärfen, Sägen und Schleifen von Werkstücken, zum Trennen von Werkstücken, zum Entfernen von Fugenmaterial, von Bodenbelägen oder Fliesen eingesetzt werden.

Aus der EP 0 881 023 A2 ist ein Schneid- und Schleifwerkzeug für eine Handwerkzeugmaschine mit einer eine oszillierende Schwenkbewegung ausführenden Abtriebswelle beschrieben. Der dort gezeigte Werkzeugaufsatz weist eine Arbeitskante aus zwei oder mehreren zueinander angewinkelten Schneid- bzw. Schleifkanten auf.

Aus der DE 29 34 258 A1 ist eine Handwerkzeugmaschine mit einer oszillierenden Abtriebseinheit und einem Werkzeug mit einer Arbeitskante, die bogenförmig ausgebildet ist, die in eine Begrenzungslinie übergeht, bekannt.

Aus der EP 1 297 932 A ist ein Werkzeugaufsatz für eine Handwerkzeugmaschine mit einer oszillierenden Abtriebseinheit, mit einem Befestigungsmittel zur Verbindung mit der Abtriebseinheit und mit einer Arbeitskante, die in eine seitliche Begrenzungslinie übergeht, wobei die Arbeitskante bogenförmig ausgebildet ist, bekannt.

Aus der US 2002/104421 A1 ist ein Werkzeugaufsatz für eine Handwerkzeugmaschine mit einer oszillierenden Abtriebseinheit, mit einem Befestigungsmittel zur Verbindung mit der Abtriebseinheit und mit einer Arbeitskante, die in eine seitliche Begrenzungslinie übergeht, wobei die Arbeitskante bogenförmig ausgebildet ist, bekannt.

Aus der US 3,905,374 ist ein Werkzeugaufsatz für eine oszillierend antreibende Werkzeugmaschine, wobei das Sägeblatt über ein Befestigungsmittel in der Form eines Bolzens mit der Werkzeugmaschine verbunden ist, bekannt. Ferner hat das Sägeblatt eine Arbeitskante mit bogenförmig angeordneten Zähnen und sie geht an einem Ende unter einem Winkel von kleiner oder gleich 95° in seitliche Begrenzungslinien abgewinkelt über.

### Vorteile der Erfindung

Die Erfindung wird vom Gegenstand des anspruchs 1 beschrieben. Es kann ein gleichmäßiger Einstich in ein Werkstück bei gleichmäßiger Beanspruchung der Arbeitskante erreicht werden. Die bogenförmige Arbeitskante dient dazu, das Werkstück zu bearbeiten. Die Bogenform erlaubt dabei sowohl einen seitlichen Vortrieb des Werkzeugaufsatzes senkrecht zur Einstichrichtung als auch durch einen Haltungswechsel der Handwerkzeugmaschine weitere nahezu beliebige Verwendungen des Werkzeugaufsatzes zur Bearbeitung des Werkstücks, wie insbesondere zum Schleifen, Schneiden, Sägen, Abheben oder Trennen. Der Werkzeugaufsatz muss nicht ausgetauscht werden.

Das Befestigungsmittel dient zur Übertragung einer Arbeitsbewegung. Die Arbeitskante kann in die seitliche Begrenzungslinie abwinkeln. Das Befestigungsmittel kann beliebig ausgestaltet sein. So ist eine z.B. von Bohraufsätzen bekannte stiftförmige Ausgestaltung vorstellbar, wobei der Stift mittels eines Dreh-, Schraub- oder Schnellverschlusses auf der Abtriebswelle aufgenommen wird. Aber auch eine Klett-, Spann- oder Schraubverbindung ist möglich. Insbesondere kann auch eine Öffnung im Werkzeugaufsatz vorgesehen sein, die die Abtriebswelle aufnimmt und über die der Werkzeugaufsatz mit dieser verbunden wird.

Die bogenförmige Arbeitskante ist durch den Umfang eines Kreises gebildet, um dessen Mittelpunkt das Befestigungsmittel - insbesondere im Kreis zentriert - angeordnet ist. Mit dieser Ausgestaltung entsteht bei der Oszillation der Abtriebswelle des Handwerkzeugs keine Vibration des Werkzeugaufsatzes in Vortriebsrichtung oder in Richtung senkrecht zur Arbeitskante. Zudem ist dadurch der Werkzeugaufsatz vergleichsweise stabil und multifunktional einsetzbar. Durch die kreisförmige Ausgestaltung kann der Werkzeugaufsatz abgesehen vom senkrechten Einstich auf einfache Weise durch ein Drehen der Handwerkzeugmaschine zum Bearbeiten eines Werkstücks, wie zum Schleifen, Schneiden, Sägen, Abheben oder Trennen, verwendet werden.

Die Arbeitskante ist an mindestens einem Ende unter einem Winkel von kleiner oder gleich 95° zu der seitlichen Begrenzungslinie abgewinkelt. Bei einem derartig ausgestalteten Werkzeugaufsatz liegt bei einem senkrechten Einstich mit Vortrieb des Werkzeugaufsatzes entlang der seitlichen Begrenzungslinie der am tiefsten gelegene Punkt des Vortriebs in der Ecke zwischen bogenförmiger Arbeitskante und seitlicher Begrenzungslinie. Zwischen dem Grund des Einstichs und der seitlichen Einstichkante befindet sich kein Restquerschnitt des Werkstücks mehr, da auch an dieser Stelle aufgrund der gewählten Geometrie des Werkzeugaufsatzes zerspant wird. Zur Abtrennung eines Werkstückteils muss nicht tiefer eingestochen werden, als die Dicke des Werkstücks beträgt.

Beträgt der Winkel zwischen Arbeitskante und seitlicher Begrenzungslinie 90°, so entsteht bei dem beschriebenen Vortrieb des Werkzeugaufsatzes zwischen dem Grund des Einstichs und der seitlichen Einstichkante ein rechter Winkel. Beträgt der Winkel weniger als 90°, so lässt sich mit dem Werkzeugaufsatz zwischen Einstichgrund und Einstichkante sogar ein spitzer Winkel erzielen. Ein um maximal 5° größerer Winkel als 90° ist aufgrund der Oszillation der Arbeitskante noch tolerierbar. Bei einem Winkel von mehr als 95° wird der oben beschriebene Vorteil nicht mehr erreicht.

Der Werkzeugaufsatz selbst kann - abgesehen von dem Winkel zwischen Arbeitskante und seitlicher Begrenzungslinie - eine beliebige äußere Form aufweisen, die von dem jeweiligen Einsatzgebiet und der jeweiligen Handwerkzeugmaschine abhängig ist. Insbesondere kann der Werkzeugaufsatz auch gekröpft ausgestaltet sein.

In einer weiteren vorteilhaften Ausgestaltung ist die bogenförmige Arbeitskante durch den Umfangsabschnitt eines Kreissektors gebildet, wobei die Arbeitskante beidseitig in jeweils eine sich in radialer Richtung erstreckende seitliche Begrenzungslinie abwinkelt. Der Winkel zwischen den beiden den Kreissektor definierenden seitlichen Begrenzungslinien sollte vorteilhafterweise zwischen 30° und 270° betragen. Ist der Winkel kleiner, so wird der Werkzeugaufsatz in Bezug auf die nötige Länge der Arbeitskante zu der hierzu erforderlichen Länge der Begrenzungslinie labil. Bei einem größeren Winkel ist ein Einstich des Werkzeugaufsatzes nur bis zu einer begrenzten Tiefe möglich.

Für die mechanische Stabilität des Werkzeugaufsatzes ist es zweckmäßig, wenn die sich radial erstreckenden Begrenzungslinien vor Erreichen des Mittelpunkts über eine Verbindungskontur miteinander verbunden sind. Diese Verbindungskontur kann beliebig, insbesondere mit bogenförmigen Übergängen, ausgestaltet sein. Die Ausgestaltung des Werkzeugaufsatzes mit einer Verbindungskontur ergibt zudem mehr Raum zur Anbringung des Befestigungsmittels.

Vorteilhafterweise ist die bogenförmige Arbeitskante durch den Umfangsabschnitt eines Kreissegments gebildet, wobei die Arbeitskante beidseitig in eine Begrenzungslinie abwinkelt, die im Wesentlichen durch den geraden Abschnitt des Kreissegments gebildet ist. Diese Ausgestaltung erlaubt mit einem großen Radius des Kreissegments besonders tiefe Einstiche. Zur Anbringung des Befestigungsmittels kann das Kreissegment seitlich entsprechend verlängert sein.

Die Arbeitskante zeichnet sich dadurch aus, dass mit ihr das Werkstück bearbeitet wird. Die Arbeitskante ist für den Vortrieb des Werkzeugaufsatzes zuständig und kann in vielerlei Form ausgestaltet sein. So kann sie je nach Anwendungsfall als eine scharfe Schneide ausgebildet sein oder mit einem rauen oder abrasiven Besatz, wie Diamant oder Korund, versehen sein. Die Kante selbst kann auch eher flach oder breit hen sein. Die Kante selbst kann auch eher flach oder breit ausgestaltet sein, um beispielsweise ein Werkstück schleifend oder spanend zu bearbeiten. Für einen senkrechten Einstich in ein Werkstück ist es insbesondere vorteilhaft, wenn die Arbeitskante mit einer Sägezahnung versehen ist.

### Zeichnung

Weitere Vorteile ergeben sich aus der folgenden Zeichnungsbeschreibung. In den Figuren 1 und 2 der Zeichnung sind Ausführungsbeispiele der Erfindung dargestellt. Die Figur 3 zeigt eine weitere, nicht vom Schutzbereich umfasste Ausführungsform eines Werkzeugaufsatzes, der das Verständnis der Erfindung erleichtert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

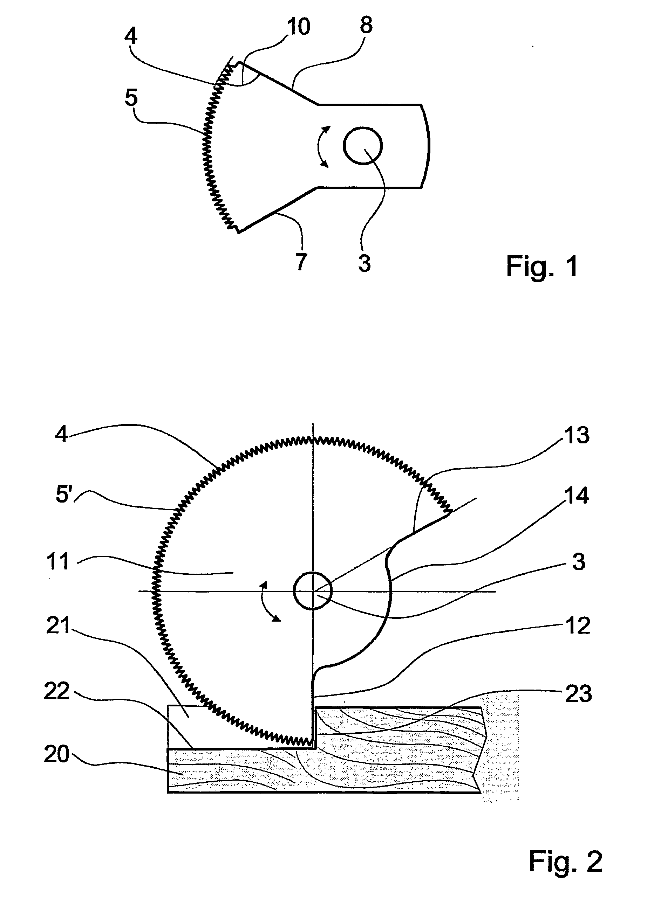

- Fig. 1: einen Werkzeugaufsatz mit einer Arbeitskante in Form eines Ellipsoidbogens,
- Fig. 2: einen Werkzeugaufsatz in Form eines Kreissegments mit einer Verbindungskontur,

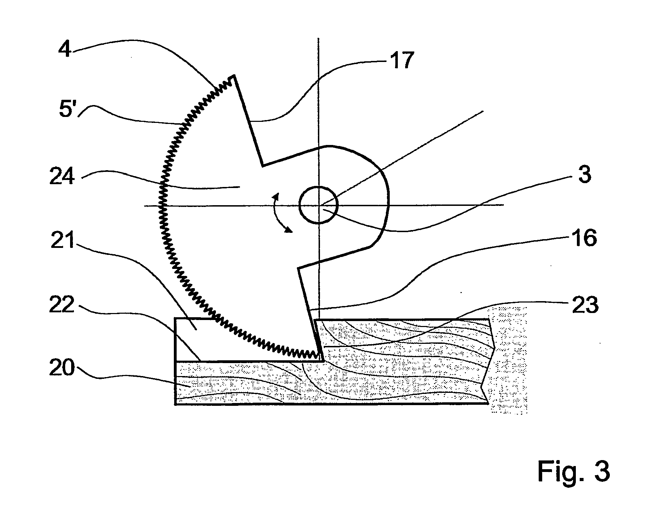

- Fig. 3: einen weiteren Werkzeugaufsatz in Form eines Kreissegments.

### Beschreibung der Ausführungsbeispiele

Figur 1 zeigt einen Werkzeugaufsatz für eine Handwerkzeugmaschine mit oszillierender Abtriebswelle, welcher einen senkrechten Einstich in ein Werkstück ermöglicht. Der Werkzeugaufsatz weist eine Öffnung oder Bohrung auf, die die Abtriebswelle der Handwerkzeugmaschine aufnimmt. Durch die oszillierende Drehbewegung der Abtriebswelle bewegt sich der Werkzeugaufsatz zwischen zwei Winkelgraden hin und her, wie es schematisch durch die Pfeile angedeutet ist. Auf diese Weise wird ein Werkstück mit einer Arbeitskante 4, die eine Sägezahnung aufweist, bearbeitet. Der Oszillationsbereich beträgt 4°. Die Arbeitskante 4 ist in Form eines Ellipsoidbogens 5 ausgestaltet, der beidseitig unter einem Winkel 10 von 90° in die seitlichen Begrenzungslinien 7 und 8 abwinkelt. Auf diese Weise wird bei einem Einstich des Werkzeugaufsatzes entlang einer der seitlichen Begrenzungslinien 7 und 8 eine saubere Ecke von 90° zwischen Einstichgrund und Einstichkante aus dem Werkstück herausgearbeitet.

Der Werkzeugaufsatz gemäß Figur 2 ist in Form eines Kreissektors 11 ausgestaltet, der als Befestigungsmittel 3 im Kreismittelpunkt eine Bohrung zur Aufnahme der Abtriebswelle einer Handwerkzeugmaschine aufweist. Der Kreissektor 11 wird im Wesentlichen durch die Arbeitskante 4, die die Form eines Kreisbogens 5' aufweist, und durch zwei in radialer Richtung verlaufende seitliche Begrenzungslinien 12 und 13 gebildet. Die Begrenzungslinien 12 und 13 sind über eine bogenförmige Anschlüsse aufweisende Verbindungskontur 14 miteinander verbunden.

Zusätzlich ist in Figur 2 ein bearbeitetes Werkstück 20 dargestellt. Man erkennt den mittels des Werkzeugaufsatzes erzielten Einstich 21 im Werkstück 20. Der Einstich 21 weist einen Einstichgrund 22 und eine Einstichkante 23 auf. Durch den rechten Winkel zwischen der Arbeitskante 4 und der seitlichen Begrenzungslinie 12 des Werkzeugaufsatzes wird ein ebenfalls rechter Winkel zwischen Einstichgrund 22 und Einstichkante 23 erzielt. Es verbleibt in der Ecke kein Restmaterial des Werkstücks 20.

Die Arbeitskante 4 des Werkzeugaufsatzes gemäß Figur 3 ist Teil des Umfangs eines Kreissegments 24, welches durch die Arbeitskante 4 und seitliche, auf einer Gerade liegende Begrenzungslinien 16 und 17 gebildet wird. In einer Verlängerung sitzt als Befestigungsmittel im Kreismittelpunkt wiederum eine Bohrung. Man erkennt, dass sich aufgrund des Winkels von weniger als 90° zwischen der Arbeitskante 4 und der seitlichen Begrenzungslinie 16 im Werkstück 20 ein Einstich 21 erzielen lässt, wobei zwischen Einstichgrund 22 und Einstichkante 23 ein spitzer Winkel vorliegt.

### Bezugszeichen

- 3: Befestigungsmittel
- 4: Arbeitskante
- 5: Ellipsoidbogen
- 5': Kreisbogen
- 7, 8: Begrenzungslinie
- 10: Winkel
- 11: Kreissektor
- 12, 13: Begrenzungslinie

- 14: Verbindungskontur
- 16, 17: Begrenzungslinie
- 20: Werkstück
- 21: Einstich
- 22: Einstichgrund
- 23: Einstichkante
- 24: Kreissegment

## Patentansprüche

1. Verfahren mit einem Werkzeugaufsatz für eine Handwerkzeugmaschine mit einer oszillierenden Abtriebseinheit, mit einem Befestigungsmittel (3) zur Verbindung mit der Abtriebseinheit und mit einer Arbeitskante (4), die in eine seitliche Begrenzungslinie (12, 13) übergeht, wobei die Arbeitskante (4) bogenförmig ist und die bogenförmige Arbeitskante (4) durch den Umfang eines Kreises gebildet ist, um dessen Mittelpunkt das Befestigungsmittel (3) angeordnet ist, wobei die Arbeitskante (4) an mindestens einem Ende unter einem Winkel (10) von 90° zu der seitlichen Begrenzungslinie (12, 13) abgewinkelt ist und wobei die Arbeitskante (4) durch den Umfangsabschnitt eines Kreissektors (11) gebildet wird, wobei die Arbeitskante (4) beidseitig in jeweils eine sich in radialer Richtung erstreckende seitliche Begrenzungslinie (12, 13) abwinkelt und wobei das Befestigungsmittel (3) als Öffnung ausgebildet ist, und bei einem senkrechten Einstich mit Vortrieb des Werkzeugaufsatzes entlang der seitlichen Begrenzungslinie (12, 13) der am tiefsten gelegene Punkt des Vortriebs in einer Ecke zwischen bogenförmiger Arbeitskante (4) und seitlicher Begrenzungslinie (12, 13) liegt und zwischen dem Grund des Einstichs und der seitlichen Einstichskante sich kein Restquerschnitt des Werkstücks mehr befindet, da auch an dieser Stelle aufgrund der gewählten Geometrie des Werkzeugaufsatzes zerspant wird.

2. Verfahren nach Anspruch 1,
**dadurch gekennzeichnet, dass** der Kreissektor (11) einen Winkel zwischen 30° und 270° überstreicht.

3. Verfahren nach Anspruch 1 oder 2,
**dadurch gekennzeichnet, dass** die sich radial erstreckenden Begrenzungslinien (12, 13) vor Erreichen des Mittelpunkts über eine Verbindungskontur (14) miteinander verbunden sind.

4. Verfahren nach einem der Ansprüche 1 bis 3,
**dadurch gekennzeichnet, dass** die Arbeitskante (4) mit einer Sägezahnung versehen ist.

## Claims

1. Process with a tool attachment for a portable power tool having an oscillating output unit, comprising a fastening means (3) for connecting to the output unit and comprising a working edge (4) which merges into a lateral boundary line (12, 13), wherein the working edge (4) is arc-shaped and the arc-shaped working edge (4) is formed by the circumference of a circle, around the centre of which the fastening means (3) is arranged, wherein the working edge (4), at least at one end, is angled relative to the lateral boundary line (12, 13) at an angle (10) of 90°, and wherein the working edge (4) is formed by the circumferential section of a circle sector (11), wherein the working edge (4) is angled on both sides into respective lateral boundary edges (12, 13) extending in the radial direction, and wherein the fastening means (3) is formed as an opening, and, during a perpendicular cut with advance of the tool attachment along the lateral boundary line (12, 13), the deepest point of the advance lies in a corner between arc-shaped working edge (4) and lateral boundary line (12, 13) and a residual cross section of the workpiece no longer remains between the bottom of the cut and the lateral cut edge, since cutting is also carried out at this location on account of the selected geometry of the tool attachment.

2. Process according to Claim 1, **characterized in that** the circle sector (11) covers an angle of between 30° and 270°.

3. Process according to Claim 1 or 2, **characterized in that** the radially extending boundary lines (12, 13) are connected to one another via a connecting contour (14) before reaching the centre.

4. Process according to one of Claims 1 to 3, **characterized in that** the working edge (4) is provided with a saw tooth system.

## Revendications

1. Procédé comprenant une pièce rapportée d'outil pour une machine-outil à main, avec une unité de prise de force oscillante, avec un moyen de fixation (3) devant être connecté à l'unité de prise de force et avec une arête de travail (4) qui se prolonge par une ligne de limitation latérale (12, 13), l'arête de travail (4) étant de forme courbe et l'arête de travail de forme courbe (4) étant formée par la périphérie d'un cercle, autour du centre duquel est disposé le moyen de fixation (3), l'arête de travail (4) étant coudée au niveau d'au moins une extrémité en formant un angle (10) de 90° avec la ligne de limitation latérale (12, 13), et l'arête de travail (4) étant formée par la portion périphérique d'un secteur de cercle (11), l'arête de travail (4) étant coudée des deux côtés dans une ligne de limitation latérale respective (12, 13) s'étendant dans la direction radiale et le moyen de fixation (3) étant réalisé sous forme d'ouverture, et dans le cas d'une incision verticale avec avance de la pièce rapportée d'outil le long de la ligne de limitation latérale (12, 13), le point le plus profond de l'avance se trouve dans un coin entre l'arête de travail (4) de forme courbe et la ligne de limitation latérale (12, 13) et plus aucune section transversale résiduelle de la pièce n'existant entre la base de l'incision et l'arête d'incision latérale, car à cet endroit également, un enlèvement de copeaux a lieu du fait de la géométrie choisie de la pièce rapportée d'outil.

2. Procédé selon la revendication 1,
**caractérisé en ce que** le secteur de cercle (11) couvre un angle compris entre 30° et 270°.

3. Procédé selon la revendication 1 ou 2,
**caractérisé en ce que** les lignes de limitation s'étendant radialement (12, 13) sont connectées l'une à l'autre avant d'atteindre le centre par un contour de connexion (14).

4. Procédé selon l'une quelconque des revendications 1 à 3,
**caractérisé en ce que** l'arête de travail (4) est pourvue d'un profil en dents de scie.
